# EUROPEAN PATENT SPECIFICATION

(11) **EP 3 592 010 B1**
(45) Date of publication and mention of the grant of the patent: **02.06.2021**
(21) Application number: 18181381.7
(22) Date of filing: 03.07.2018
(51) Int. Cl.: H04W 4/90, H04L 29/06

(54) **METHOD FOR IMPROVED HANDLING OF IP MULTIMEDIA SUBSYSTEM CALLS AND CONFIGURATION OF A USER EQUIPMENT, MOBILE COMMUNICATION NETWORK, PROGRAM AND COMPUTER-READABLE MEDIUM**
VERFAHREN ZUR VERBESSERTEN BEHANDLUNG VON ANRUFEN EINES IP-MULTIMEDIA-UNTERSYSTEMS UND KONFIGURATION EINES BENUTZERGERÄTS, MOBILKOMMUNIKATIONSNETZWERK, PROGRAMM UND COMPUTERLESBARES MEDIUM
PROCÉDÉ POUR UNE GESTION AMÉLIORÉE D'APPELS DE SOUS-SYSTÈME MULTIMÉDIA IP ET CONFIGURATION D'UN ÉQUIPEMENT UTILISATEUR, RÉSEAU DE COMMUNICATION MOBILE, PROGRAMME ET SUPPORT LISIBLE PAR ORDINATEUR

(43) Date of publication of application: 08.01.2020
(73) Proprietor: Deutsche Telekom AG, 53113 Bonn (DE)
(72) Inventor: MELANDER, Mari, 53225 Bonn (DE); LINDEN, Christoph, 53639 Königswinter (DE)
(74) Representative: Schwöbel, Thilo K.

(56) References cited:
- US-A1- 2016 345 152
- "3rd Generation Partnership Project; Technical Specification Group Services and System Aspects; IP Multimedia Subsystem (IMS) emergency sessions (Release 15)", 3GPP STANDARD; TECHNICAL SPECIFICATION; 3GPP TS 23.167, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.2.0, 19 June 2018 (2018-06-19), pages 1-63, XP051472846, [retrieved on 2018-06-19]

## Description

### BACKGROUND

The present invention relates to a method for improved handling of IP multimedia subsystem emergency calls and configuration of a user equipment being attached to a visited mobile communication network via a radio access network of or associated with the visited mobile communication network.

Additionally, the present invention relates to a mobile communication network for improved handling of IP multimedia subsystem emergency calls and configuration of a user equipment being attached to the mobile communication network serving as visited mobile communication network via a radio access network of or associated with the visited mobile communication network.

Additionally, the present invention relates to a user equipment for improved handling of IP multimedia subsystem emergency calls and configuration of the user equipment being attached to a visited mobile communication network via a radio access network of or associated with the visited mobile communication network.

Furthermore, the present invention relates to a program and to a computer-readable medium for improved handling of IP multimedia subsystem emergency calls.

The present invention generally relates to user equipment attaching to a mobile communication network using different methods - such as, e.g., voice over LTE or the like - together with IP multimedia subsystem technology in order to initiate emergency calls.

In mobile communication networks, in CS domain (circuit switched domain) as well as when other access technologies, such as VoLTE (voice over LTE), is used, the operators of such mobile communication networks are obliged to support emergency calls. In the national regulations regarding emergency calls, there are some differences in different countries. One of these differences is, whether or not the emergency calls are allowed for unregistered users, i.e. in situations when there either is no SIM card in the device, or there are no credentials to authenticate with the current visited mobile communication network of the user equipment. This means that - in order to be able to efficiently place IP multimedia subsystem emergency calls in various visited mobile communication networks - voice over LTE devices or user equipment (such as mobile phones, tablet computers or phablet devices, etc...) would need to have this information for the different visited mobile communication networks, and, hence, maintain a corresponding list of the piece of information, or the parameter, related to different visited mobile communication networks.

In principle, such an information is able to be conveyed to the user equipment (especially a voice over LTE device or user equipment) either as part of Late Customization (defined in GSMA PRD TS.32 "Technical Adaptation of Devices through Late Customization", Version 3.0), or by two alternative configuration methods, OMA DM v.1.2 (defined in OMA-ERELD-DM-V1.2 Enabler Release Definition for OMA Device Management Approved Version 1.2), and HTTP based RCS configuration (defined in GSMA PRD RCC.14, "Service Provider Device Configuration", Version 5.0).

However, such configuration methods are typically only applied by the home operator and the parameters are only related to the home network. For voice over LTE, typically different roaming models, namely local break-out and S8HR (both defined in GSMA PRD IR.65 (IMS Roaming, Interconnection and Interworking Guidelines, Version 27.0) and GSMA PRD IR.88 (LTE and EPC Roaming Guidelines, Version 16.0)), are used. However, regardless of the roaming model, the emergency calls must always be handled locally in the visited mobile communication network. Such emergency calls (e.g., voice over LTE emergency calls) will therefore have the challenge, that the user equipment must execute the procedures in the visited network, but the relevant parameters are configured according to the home network (and/or the existence or non-existence of relevant opportunities or possibilities in the visited network are unknown to the user equipment), leading, in the worst case, either to failed emergency calls because of such potential functionality mismatch or to longer call establishment procedures for emergency calls, hence time is lost in realizing such emergency calls.

Document XP051472846, entitled "3rd Generation Partnership Project; Technical Specification Group Services and System Aspects; IP Multimedia Subsystem (IMS) emergency sessions (Release 15), 3GPP TS 23.167 V15.2.0", discloses the service description for emergency services in the IP Multimedia Core Network Subsystem.

Document US2016345152 discloses a solution in which a user equipment, attached to a mobile communication network, receives an emergency call capability information indicative of whether the mobile communication network supports an emergency service.

### SUMMARY

An object of the present invention is to provide an effective and simple solution to realize an improved handling of IP multimedia subsystem emergency calls and an improved configuration of a user equipment attempting an IP multimedia subsystem emergency call while connected to a visited mobile communication network.

The present invention is defined by the subject-matter of the independent claims. Further details are provided in the dependent claims.

The object of the present invention is achieved by a method for improved handling of IP multimedia subsystem emergency calls and configuration of a user equipment being attached to a visited mobile communication network via a radio access network of or associated with the visited mobile communication network, wherein the method comprises - in dependency of an unregistered emergency call support indication related to the visited mobile communication network and to IP multimedia subsystem emergency calls - either a first and a second step, or the first and a third step:
-- in the first step, the user equipment - while attaching or being attached to the visited mobile communication network - receives the unregistered emergency call support indication regarding the visited mobile communication network, the unregistered emergency call support indication being indicative of the visited mobile communication network either providing or not providing the possibility of an unregistered IP multimedia subsystem emergency call for the user equipment in case it is attached to the visited mobile communication network,
-- in the second step subsequent to the first step, and in case that an IP multimedia subsystem emergency call needs to be initiated by the user equipment while the user equipment is attached to the visited mobile communication network, the user equipment initiates the IP multimedia subsystem emergency call as an unregistered emergency call in case that the unregistered emergency call support indication indicates that the visited mobile communication network does provide the possibility of an unregistered emergency call, and
-- in the third step subsequent to the first step, and in case that an IP multimedia subsystem emergency call needs to be initiated by the user equipment while the user equipment is attached to the visited mobile communication network, the user equipment attempts to initiate an emergency registration with the visited mobile communication network in case that the unregistered emergency call support indication indicates that the visited mobile communication network does not provide the possibility of an unregistered emergency call, wherein in case of the emergency registration failing, the user equipment attempts to connect to a further visited mobile communication network in order to initiate an emergency call.

It is thereby advantageously possible according to the present invention to provide a procedure for the visited network to avoid the above mentioned potential functionality mismatch regarding the existence (or non-existence) of the possibility to place unregistered emergency calls within the visited mobile communication network.

According to the present invention, the relevant parameter for unregistered emergency calls (i.e. IP multimedia subsystem emergency calls, especially voice over LTE emergency calls) in a roaming user equipment (e.g. a voice over LTE device) - namely the unregistered emergency call support indication - is transmitted to the user equipment while the user equipment is attaching or being attached to the visited mobile communication network, i.e. the user equipment receives the unregistered emergency call support indication regarding the visited mobile communication network at that time. It is supposed, according to the present invention, that the (roaming) user equipment is using - in order to be attached to the visited mobile communication network - a radio access network that is either a radio access network of the visited mobile communication network or that is associated with the visited mobile communication network. Hence, according to the present invention, by transmitting the unregistered emergency call support indication to the user equipment, it is advantageously possible to provide a mechanism to avoid a potential functionality mismatch regarding whether or not the visited mobile communication network provides the possibility of an unregistered IP multimedia subsystem emergency call for the user equipment. According to the present invention, an emergency call either corresponds - according to one variant of the invention - to an emergency audio call (i.e. providing at least one audio channel (and especially no additional video channel)) between the parties to the call. Furthermore according to the present invention, an emergency call might also correspond - according to a further variant of the invention - to an emergency video call (i.e. providing at least one audio channel and additionally at least one video channel) between the parties to the call.

According to the present invention, this means that the emergency call setup can be configured to be simplified and/or to be more robust as, e.g., in case that the unregistered emergency call support indication indicates to the user equipment that the visited mobile communication network does not provide the possibility of an unregistered IP multimedia subsystem emergency call, such a user equipment will refrain from trying to initiate such an unregistered emergency call.

With the S8HR (S8 Home Routed) roaming model for voice over LTE (defined in GSMA PRD IR.65 and GSMA PRD IR.88), the unregistered emergency calls become very relevant. There is typically no VoLTE roaming agreement between the home mobile communication network of the user equipment and the visited mobile communication network; this means that the IMS emergency registration will always fail for such user equipment, and therefore the only possible IMS emergency call is the unregistered emergency call. If this is not allowed in the network the user equipment happens to roaming in, the user equipment, in order to place an emergency call, needs to search for other possible ways to make emergency calls, e.g. find another network.

According to a conventional deployment of voice over LTE functionality (or of other IP multimedia subsystem based access technology), a roaming user equipment (such as a voice over LTE user equipment) could be able to find out whether or not unregistered emergency calls are allowed in the visited mobile communication network merely based on a trial-and-error approach, i.e. by first attempting an emergency registration with the visited mobile communication network; if such an emergency registration fails, the failure code potentially carries the information whether unregistered IP multimedia subsystem emergency calls are allowed. This procedure is defined in TS 24.229 sections 5.1.6.2 and 5.1.6.8.2, i.e. the user equipment initiates an IP multimedia subsystem emergency call, and especially initiates IP multimedia subsystem emergency registration towards the visited mobile communication network (or the visited IP multimedia subsystem). In case that the answer (from the visited mobile communication network or visited IP multimedia subsystem) to the user equipment consists of or comprises the information that the emergency registration failed (a message "403 Forbidden" is received by the user equipment, indicating if the unregistered emergency calls are possible), the user equipment (especially voice over LTE user equipment) either initiates an unregistered IP multimedia subsystem emergency call or applies alternative emergency procedures, e.g. search for another network. However, even though the user equipment might be able - by the user equipment initiating an IP multimedia subsystem emergency call (especially IP multimedia subsystem emergency registration) and receiving an answer from the visited mobile communication network - to find out whether or not unregistered emergency calls are allowed in the visited mobile communication network, this trial-and-error approach is prone to be unnecessarily time-consuming in a situation that an emergency call shall be placed (i.e. at least a portion of such emergency calls are delayed).

In contrast, according to the present invention, the user equipment (especially a voice over LTE device) finds out whether or not unregistered emergency calls are allowed within the visited mobile communication network when (or shortly after) it connects to the visited mobile communication network. This provides the advantage according to the present invention that the trial-and-error steps - i.e. the user equipment initiating an IP multimedia subsystem emergency call procedure (especially IP multimedia subsystem emergency registration) and receiving an answer from the visited mobile communication network - (at least for a portion of emergency calls) can be skipped and the corresponding emergency call procedure is therefore faster, which might be critical in case of emergency call.

Hence, according to the present invention, in a first step, the user equipment - while attaching or being attached to the visited mobile communication network - receives the unregistered emergency call support indication regarding the visited mobile communication network. The unregistered emergency call support indication is indicative of the visited mobile communication network either providing or not providing the possibility of an unregistered IP multimedia subsystem emergency call for the user equipment in case it is attached to the visited mobile communication network. Hence the unregistered emergency call support indication consists of just one bit of information and is able to be transported as such or as part of a larger piece of information, such as a specific byte or information element. In dependency of the value (or the information content, i.e. whether the visited mobile communication network either provides or does not provide the possibility of an unregistered IP multimedia subsystem emergency call) of the unregistered emergency call support indication related to the specific visited mobile communication network the user equipment is attaching to, either a second step, or a third step follows the first step. In the second step (i.e. the unregistered emergency call support indication does indicate that the visited mobile communication network does provide the possibility of an unregistered emergency call) in case that an IP multimedia subsystem emergency call needs to be initiated by the user equipment while the user equipment is attached to the visited mobile communication network, the user equipment initiates the IP multimedia subsystem emergency call as an unregistered emergency call. In the third step (i.e. the unregistered emergency call support indication does indicate that the visited mobile communication network does not provide the possibility of an unregistered emergency call), in case that an IP multimedia subsystem emergency call needs to be initiated by the user equipment while the user equipment is attached to the visited mobile communication network, the user equipment attempts to initiate an emergency registration with the visited mobile communication network, wherein in case of the emergency registration failing, the user equipment attempts to connect to a further visited mobile communication network in order to initiate an emergency call.

According to the present invention, the improved handling of IP multimedia subsystem calls and improved user equipment configuration supposes that the user equipment attempts or is able to attempt an IP multimedia subsystem emergency call, while being connected to a visited mobile communication network (typically using a radio access network of or associated with the visited mobile communication network).

According to the present invention, it is preferred that the unregistered emergency call support indication is part of an IP multimedia subsystem emergency call parameter information, received during the first step by the user equipment from the visited mobile communication network.

Furthermore according to the present invention, it is alternatively preferred that the unregistered emergency call support indication is transmitted to the user equipment during performing an attach procedure in order to be attached to the visited mobile communication network, especially during performing a Voice over LTE attach procedure or an IP multimedia subsystem registration procedure, especially during procedures for the user equipment to find out the local emergency numbers, especially attach accept, tracking area update accept, routing area update accept.

By either transmission method (whether as part of the IP multimedia subsystem emergency call parameter information or during performing an attach procedure in order to be attached to the visited mobile communication network), it is advantageously possible that the unregistered emergency call support indication can be used as a correct information with regard to the visited mobile communication network, such that the corresponding IP multimedia subsystem emergency call is able to be performed sufficiently quickly and correctly.

In case the unregistered emergency call support indication is transmitted during performing an attach procedure, it is advantageously possible to transmit this information (especially as an information element) together with or in an analogous manner to other parameters or pieces of information that might be relevant for placing an IP multimedia subsystem emergency call, such as, e.g., local emergency numbers to be used or the like.

According to a further embodiment of the present invention, it is also possible and preferred that the unregistered emergency call support indication is transmitted to the user equipment during the user equipment being connected or attached to the visited mobile communication network via a wireless access point using voice over WiFi, especially using an IP transportation tunnel between an evolved packet data gateway and a packet data network gateway that is especially part of a core network.

Thereby, it is advantageously possible that the unregistered emergency call support indication is transmitted in the context of various access scenarios of the user equipment to the visited mobile communication network.

According to the present invention it is furthermore preferred that the unregistered emergency call support indication is transmitted to the user equipment after performing the attach procedure in order to be attached to the visited mobile communication network.

Thereby, it is advantageously possible that the attach procedure is not required to be modified to transmit the unregistered emergency call support indication to the user equipment.

According to the present invention, it is furthermore preferred that the unregistered emergency call support indication is transmitted to the user equipment by means of at least one out of the following transport protocols (especially in case that it is transmitted as part of the IP multimedia subsystem emergency call parameter information):
-- rich communication services (RCS), especially based on the hypertext transfer protocol, and especially using a fully qualified domain name,
-- open mobile alliance device management (OMA DM), especially based on the hypertext transfer protocol, and especially using a fully qualified domain name,
-- by means of a dedicated protocol specifically used for transmitting the IP multimedia subsystem call parameter information and/or the IP multimedia subsystem emergency call parameter information
-- as part of a management object.

According to the present invention, it is thereby advantageously possible that the unregistered emergency call support indication is transmitted in an effective and reliable manner.

Furthermore, the present disclosure relates to a system for improved handling of IP multimedia subsystem emergency calls and configuration of a user equipment being attached to a visited mobile communication network via a radio access network of or associated with the visited mobile communication network, wherein the system comprises the visited mobile communication network and the user equipment, wherein the system is configured such that, in dependency of an unregistered emergency call support indication related to the visited mobile communication network and to IP multimedia subsystem emergency calls,
-- the user equipment - while attaching or being attached to the visited mobile communication network - receives the unregistered emergency call support indication regarding the visited mobile communication network, the unregistered emergency call support indication being indicative of the visited mobile communication network either providing or not providing the possibility of an unregistered IP multimedia subsystem emergency call for the user equipment in case it is attached to the visited mobile communication network,
wherein either:
-- in case that an IP multimedia subsystem emergency call needs to be initiated by the user equipment while the user equipment is attached to the visited mobile communication network, the user equipment initiates the IP multimedia subsystem emergency call as an unregistered emergency call in case that the unregistered emergency call support indication indicates that the visited mobile communication network does provide the possibility of an unregistered emergency call,
or:
-- in case that an IP multimedia subsystem emergency call needs to be initiated by the user equipment while the user equipment is attached to the visited mobile communication network, the user equipment attempts to initiate an emergency registration with the visited mobile communication network in case that the unregistered emergency call support indication indicates that the visited mobile communication network does not provide the possibility of an unregistered emergency call, wherein in case of the emergency registration failing, the user equipment attempts to connect to a further visited mobile communication network in order to initiate an emergency call.

Thereby, it is advantageously possible to provide a system such that the user equipment knows about the correct unregistered emergency call support indication to be applied in the respective visited mobile communication network.

Furthermore, the present invention relates to a mobile communication network for improved handling of IP multimedia subsystem emergency calls and configuration of a user equipment being attached to the mobile communication network serving as visited mobile communication network via a radio access network of or associated with the visited mobile communication network, wherein the visited mobile communication network is configured such that, in dependency of an unregistered emergency call support indication related to the visited mobile communication network and to IP multimedia subsystem emergency calls,
-- the visited mobile communication network transmits - while the user equipment attaching or being attached to the visited mobile communication network - the unregistered emergency call support indication regarding the visited mobile communication network, the unregistered emergency call support indication being indicative of the visited mobile communication network either providing or not providing the possibility of an unregistered IP multimedia subsystem emergency call for the user equipment in case it is attached to the visited mobile communication network,
wherein either:
-- in case that an IP multimedia subsystem emergency call needs to be initiated by the user equipment while the user equipment is attached to the visited mobile communication network, the visited mobile communication network receives the IP multimedia subsystem emergency call as an unregistered emergency call in case that the unregistered emergency call support indication indicates that the visited mobile communication network does provide the possibility of an unregistered emergency call,
or:
-- in case that an IP multimedia subsystem emergency call needs to be initiated by the user equipment while the user equipment is attached to the visited mobile communication network, the visited mobile communication network receives an attempt by the user equipment to initiate an emergency registration with the visited mobile communication network in case that the unregistered emergency call support indication indicates that the visited mobile communication network does not provide the possibility of an unregistered emergency call.

Thereby, it is advantageously possible to provide a visited mobile communication network such that the user equipment knows about the correct unregistered emergency call support indication to be applied in the respective visited mobile communication network.

Furthermore, the present invention relates to a user equipment for improved handling of IP multimedia subsystem emergency calls and configuration of the user equipment being attached to a visited mobile communication network via a radio access network of or associated with the visited mobile communication network, wherein the user equipment is configured such that, in dependency of an unregistered emergency call support indication related to the visited mobile communication network and to IP multimedia subsystem emergency calls,
-- the user equipment - while attaching or being attached to the visited mobile communication network - receives the unregistered emergency call support indication regarding the visited mobile communication network, the unregistered emergency call support indication being indicative of the visited mobile communication network either providing or not providing the possibility of an unregistered IP multimedia subsystem emergency call for the user equipment in case it is attached to the visited mobile communication network,
wherein either:
-- in case that an IP multimedia subsystem emergency call needs to be initiated by the user equipment while the user equipment is attached to the visited mobile communication network, the user equipment initiates the IP multimedia subsystem emergency call as an unregistered emergency call in case that the unregistered emergency call support indication indicates that the visited mobile communication network does provide the possibility of an unregistered emergency call,
or:
-- in case that an IP multimedia subsystem emergency call needs to be initiated by the user equipment while the user equipment is attached to the visited mobile communication network, the user equipment attempts to initiate an emergency registration with the visited mobile communication network in case that the unregistered emergency call support indication indicates that the visited mobile communication network does not provide the possibility of an unregistered emergency call, wherein in case of the emergency registration failing, the user equipment attempts to connect to a further visited mobile communication network in order to initiate an emergency call.

Additionally, the present invention relates to a computer-readable medium and a program comprising a computer readable program code which, when executed on a computer or on a network node of a visited mobile communication network or on a user equipment, or in part on the network node of the visited mobile communication network and in part on the user equipment, causes the computer or the network node of the visited mobile communication network or the user equipment to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

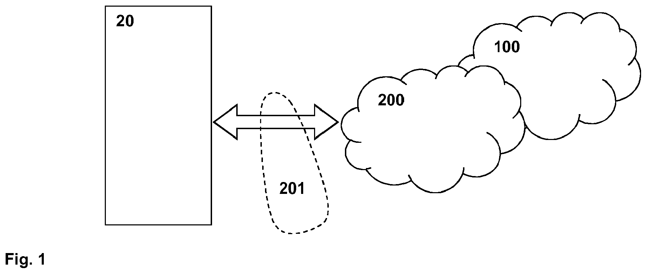

**Figure 1** schematically illustrates a home mobile communication network, a visited mobile communication network, and a user equipment according to the present invention.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a home mobile communication network 100, a visited mobile communication network 200, and a user equipment 20 according to the present invention are schematically shown. A corresponding inventive system comprises the user equipment 20 and the visited mobile communication network 200.

According to the present invention and in case that the user equipment 20 is connected or attached to the visited mobile communication network 200, in a first step, an unregistered emergency call support indication 201 is transmitted by the visited mobile communication network 200 to the user equipment 20.

The unregistered emergency call support indication 201 is indicative of the visited mobile communication network 200 either providing or not providing the possibility of an unregistered IP multimedia subsystem emergency call for the user equipment 20.

According to the present invention, after the first step, the method either comprises a second step, or a third step (i.e. one out of the first and the second step), dependent on the unregistered emergency call support indication 201 (being related to the visited mobile communication network 200 and to IP multimedia subsystem emergency calls) indicating that the visited mobile communication network 200 either provides or does not provide the possibility of an unregistered IP multimedia subsystem emergency call for the user equipment 20 in case it is attached to the visited mobile communication network 200.

In the second step subsequent to the first step, and in case that an IP multimedia subsystem emergency call needs to be initiated by the user equipment 20 while the user equipment 20 is attached to the visited mobile communication network 200, the user equipment 20 initiates the IP multimedia subsystem emergency call as an unregistered emergency call in case that the unregistered emergency call support indication 201 indicates that the visited mobile communication network 200 does provide the possibility of an unregistered emergency call.

In the third step subsequent to the first step, and in case that an IP multimedia subsystem emergency call needs to be initiated by the user equipment 20 while the user equipment 20 is attached to the visited mobile communication network 200, the user equipment 20 attempts to initiate an emergency registration with the visited mobile communication network 200 in case that the unregistered emergency call support indication 201 indicates that the visited mobile communication network 200 does not provide the possibility of an unregistered emergency call, wherein in case of the emergency registration failing, the user equipment 20 attempts to connect to a further visited mobile communication network (not depicted in Figure 1) in order to initiate an emergency call.

According to the present invention, the user equipment 20 (i.e. typically a voice over LTE user equipment 20 or user equipment 20 using an IP multimedia subsystem access technology) first connects to the visited mobile communication network 200, i.e. to its access network (first processing step, i.e. the voice over LTE user equipment 20 connects to the access network (of the visited mobile communication network 200)). This means, it is assumed that there is a data roaming agreement in place and the user equipment 20 (or voice over LTE user equipment 20) is able to connect to (or attach to) the visited mobile communication network 200. After (or during) connecting (i.e. typically attaching) to the visited mobile communication network 200, the user equipment 20 (typically voice over LTE user equipment 20) discovers, whether the visited mobile communication network 200 allows unregistered emergency calls or not (in a second processing step, i.e. the voice over LTE user equipment 20 finds out whether unregistered emergency calls are allowed in the visited mobile communication network 200), i.e. the unregistered emergency call support indication 201 is transmitted to the user equipment 20 (first step according to the present invention). Based on this information, after the user 20 has initiated an emergency call (third processing step, i.e. the voice over LTE user equipment 20 initiates an (IP multimedia subsystem) emergency call; the voice over LTE user equipment 20 initiates emergency call procedures), the user equipment 20 either initiates an unregistered emergency call (in a fourth processing step, i.e. the unregistered emergency call is allowed and the voice over LTE user equipment 20 initiates an unregistered IP multimedia subsystem emergency call) - this corresponding to the second step according to the present invention -, or it initiates emergency registration, and, if that fails, executes alternative emergency procedures, e.g. searches for another network (in a fifth processing step, i.e. the unregistered emergency call is not allowed and the voice over LTE user equipment 20 initiates emergency registration, and, if it fails, alternative emergency procedures follow, e.g. the search for another network) - this corresponding to the third step according to the present invention.

The benefit of the present invention compared to what is conventionally done, is that the emergency call procedure is optimized to be more efficient, because the trial-and-error round (i.e. the user equipment 20 initiating an IP multimedia subsystem emergency call (especially IP multimedia subsystem emergency registration) and receiving an answer from the visited mobile communication network 200 - this answer typically being a failure code to register, carrying the information about the unregistered emergency call) is not needed. This optimization potentially saves 1-2 seconds time, which might be critical in case of an emergency call.

The invention can be applied for VoWiFi (voice over WiFi) emergency calls defined in 3GPP TS 24.302. The principle of the invention can also be applied in 5G and any future access. IMS based emergency calls can in theory also made over 3G/HSPA, even though typically the emergency calls are executed, in this case, over CS domain (circuit switched domain).

Hence, according to the present invention, a new parameter (the unregistered emergency call support indication 201) is introduced, which indicates whether the visited networks allows unregistered emergency calls (or not). The possible values of the parameter could be, e.g., as follows:
0 (i.e. the unregistered emergency call support indication 201 having a value of 0): Unregistered emergency calls not allowed
1 (i.e. the unregistered emergency call support indication 201 having a value of 1): Unregistered emergency calls allowed.

A possible realization of the invention is to carry the new parameter (the unregistered emergency call support indication 201) during the attach procedure to the visited network by extending the procedures for the user equipment 20 to find out the local emergency numbers, e.g. in ATTACH ACCEPT, or TRACKING /ROUTING AREA UPDATE ACCEPT. For LTE this procedure is specified in TS 24.301 section 5.3.7, for 3G in 3GPP TS 24.008 and for VoWiFi in TS 24.302, Annex K.

Another possible realization to transmit the unregistered emergency call support indication 201 is to define the new parameter as part of either a new or an existing management object, which is transported to the voice over LTE user equipment 20 by the visited mobile communication network 200.

In case that there is no data roaming agreement in place (between the visited mobile communication network 200 and the home mobile communication network 100 of the user equipment 20), then the user equipment 20 (especially voice over LTE user equipment 20) cannot connect to the visited mobile communication network 200, i.e. the first processing step is not possible. In this case neither the transmission of the unregistered emergency call support indication 201 (to the user equipment 20) during network attach, nor the transmission as part of a management object would work. In such a situation, the user equipment 20 (or voice over LTE user equipment 20) would only initiate an IP multimedia subsystem (or voice over LTE) emergency call if the CS domain is not available. In this case, after the user initiates an (IP multimedia subsystem) emergency call (third processing step), the user equipment 20 would initiate emergency attach procedures and the unregistered emergency call support indication 201 can be carried during these procedures, e.g. ATTACH ACCEPT. For LTE the emergency attach procedure is specified in TS 24.301, for 3G in 3GPP TS 24.008.

## Claims

1. Method for improved handling of IP multimedia subsystem emergency calls and configuration of a user equipment (20) being attached to a visited mobile communication network (200) via a radio access network of or associated with the visited mobile communication network (200), wherein the method comprises - in dependency of an unregistered emergency call support indication (201) related to the visited mobile communication network (200) and to IP multimedia subsystem emergency calls - either a first and a second step, or the first and a third step:
-- in the first step, the user equipment (20) - while attaching to the visited mobile communication network (200) - receives, from the visited mobile communication network (200) the unregistered emergency call support indication (201) regarding the visited mobile communication network (200), the unregistered emergency call support indication (201) being indicative of the visited mobile communication network (200) either providing or not providing the possibility of an unregistered IP multimedia subsystem emergency call for the user equipment (20) in case it is attached to the visited mobile communication network (200), wherein the unregistered emergency call support indication (201) is transmitted to the user equipment (20) during performing an attach procedure in order to be attached to the visited mobile communication network (200), wherein the unregistered emergency call support indication (201) indicates whether or not unregistered emergency calls are allowed within the visited mobile communication network, wherein the unregistered emergency call support indication (201) is transmitted together with local emergency numbers to be used for placing an IP multimedia subsystem emergency call,
-- in the second step subsequent to the first step, and in case that an IP multimedia subsystem emergency call needs to be initiated by the user equipment (20) while the user equipment (20) is attached to the visited mobile communication network (200), the user equipment (20) initiates the IP multimedia subsystem emergency call to the visited mobile communication network (200) as an unregistered emergency call in case that the unregistered emergency call support indication (201) indicates that the visited mobile communication network (200) does provide the possibility of an unregistered emergency call, and
-- in the third step subsequent to the first step, and in case that an IP multimedia subsystem emergency call needs to be initiated by the user equipment (20) while the user equipment (20) is attached to the visited mobile communication network (200), the user equipment (20) attempts to initiate an emergency registration with the visited mobile communication network (200) in case that the unregistered emergency call support indication (201) indicates that the visited mobile communication network (200) does not provide the possibility of an unregistered emergency call, wherein in case of the emergency registration failing, the user equipment (20) attempts to connect to a further visited mobile communication network in order to initiate an emergency call.

2. Method according to claim 1, wherein the unregistered emergency call support indication (201) is transmitted to the user equipment (20) during performing a Voice over LTE attach procedure, especially in the form of an extended LTE attach procedure.

3. Method according to one of the preceding claims, wherein the unregistered emergency call support indication (201) is transmitted to the user equipment (20) during the user equipment (20) being connected or attached to the visited mobile communication network (200) via a wireless access point using voice over WiFi, especially using an IP transportation tunnel between an evolved packet data gateway and a packet data network gateway.

4. Method according to one of the preceding claims, wherein the unregistered emergency call support indication (201) is transmitted to the user equipment (20) by means of at least one out of the following transport protocols:
-- rich communication services (RCS), especially based on the hypertext transfer protocol, and especially using a fully qualified domain name,
-- open mobile alliance device management (OMA DM), especially based on the hypertext transfer protocol, and especially using a fully qualified domain name,
-- by means of an extended emergency registration procedure, especially by means of transmitting the unregistered emergency call support indication (201) as part of a session initiation protocol message or header field thereof,
-- by means of a dedicated protocol specifically used for transmitting the IP multimedia subsystem call parameter information (310) and/or the IP multimedia subsystem emergency call parameter information (320)
-- as part of a management object.

5. Mobile communication network for improved handling of IP multimedia subsystem emergency calls and configuration of a user equipment (20) being attached to the mobile communication network serving as visited mobile communication network (200) via a radio access network of or associated with the visited mobile communication network (200), wherein the visited mobile communication network (200) is configured such that, in dependency of an unregistered emergency call support indication (201) related to the visited mobile communication network (200) and to IP multimedia subsystem emergency calls,
-- the visited mobile communication network (200) transmits to the user equipment (20) - while the user equipment (20) attaches to the visited mobile communication network (200) - the unregistered emergency call support indication (201) regarding the visited mobile communication network (200), the unregistered emergency call support indication (201) being indicative of the visited mobile communication network (200) either providing or not providing the possibility of an unregistered IP multimedia subsystem emergency call for the user equipment (20) in case it is attached to the visited mobile communication network (200), wherein the unregistered emergency call support indication (201) is transmitted to the user equipment (20) during performing an attach procedure in order to be attached to the visited mobile communication network (200), wherein the unregistered emergency call support indication (201) indicates whether or not unregistered emergency calls are allowed within the visited mobile communication network, wherein the unregistered emergency call support indication (201) is transmitted together with local emergency numbers to be used for placing an IP multimedia subsystem emergency call,
wherein either:
-- in case that an IP multimedia subsystem emergency call needs to be initiated by the user equipment (20) while the user equipment (20) is attached to the visited mobile communication network (200), the visited mobile communication network (200) receives the IP multimedia subsystem emergency call as an unregistered emergency call from the user equipment (20) in case that the unregistered emergency call support indication (201) indicates that the visited mobile communication network (200) does provide the possibility of an unregistered emergency call,
or:
-- in case that an IP multimedia subsystem emergency call needs to be initiated by the user equipment (20) while the user equipment (20) is attached to the visited mobile communication network (200), the visited mobile communication network (200) receives an attempt by the user equipment (20) to initiate an emergency registration with the visited mobile communication network (200) in case that the unregistered emergency call support indication (201) indicates that the visited mobile communication network (200) does not provide the possibility of an unregistered emergency call.

6. User equipment (20) for improved handling of IP multimedia subsystem emergency calls and configuration of the user equipment (20) being attached to a visited mobile communication network (200) via a radio access network of or associated with the visited mobile communication network (200), wherein the user equipment (20) is configured such that, in dependency of an unregistered emergency call support indication (201) related to the visited mobile communication network (200) and to IP multimedia subsystem emergency calls,
-- the user equipment (20) - while attaching to the visited mobile communication network (200) - receives, from the visited mobile communication network (200), the unregistered emergency call support indication (201) regarding the visited mobile communication network (200), the unregistered emergency call support indication (201) being indicative of the visited mobile communication network (200) either providing or not providing the possibility of an unregistered IP multimedia subsystem emergency call for the user equipment (20) in case it is attached to the visited mobile communication network (200), wherein the unregistered emergency call support indication (201) is received by the user equipment (20) during performing an attach procedure in order to be attached to the visited mobile communication network (200), wherein the unregistered emergency call support indication (201) indicates whether or not unregistered emergency calls are allowed within the visited mobile communication network, wherein the unregistered emergency call support indication (201) is transmitted together with local emergency numbers to be used for placing an IP multimedia subsystem emergency call, wherein either:
-- in case that an IP multimedia subsystem emergency call needs to be initiated by the user equipment (20) while the user equipment (20) is attached to the visited mobile communication network (200), the user equipment (20) initiates the IP multimedia subsystem emergency call to the visited mobile communication network (200) as an unregistered emergency call in case that the unregistered emergency call support indication (201) indicates that the visited mobile communication network (200) does provide the possibility of an unregistered emergency call, or:
-- in case that an IP multimedia subsystem emergency call needs to be initiated by the user equipment (20) while the user equipment (20) is attached to the visited mobile communication network (200), the user equipment (20) attempts to initiate an emergency registration with the visited mobile communication network (200) in case that the unregistered emergency call support indication (201) indicates that the visited mobile communication network (200) does not provide the possibility of an unregistered emergency call, wherein in case of the emergency registration failing, the user equipment (20) attempts to connect to a further visited mobile communication network in order to initiate an emergency call.

7. Computer program product comprising instructions which, when executed on a computer or on a network node of a visited mobile communication network (200) or on a user equipment (20), or in part on the network node of the visited mobile communication network (200) and in part on the user equipment (20), causes the computer or the network node of the visited mobile communication network (200) or the user equipment (20) to perform a method according to one of claims 1 to 4.

8. Computer-readable medium comprising instructions which when executed on a computer or on a network node of a visited mobile communication network (200) or on a user equipment (20), or in part on the network node of the visited mobile communication network (200) and in part on the user equipment (20), causes the computer or the network node of the visited mobile communication network (200) or the user equipment (20) to perform a method according to one of claims 1 to 4.

## Patentansprüche

1. Verfahren zur verbesserten Handhabung von IP-Multimedia-Subsystem-Notrufen und Einrichtung einer Benutzerausrüstung (20), die an ein besuchtes Mobilkommunikationsnetz (200) über ein Funkzugangsnetz des besuchten Mobilkommunikationsnetzes (200) angebunden ist oder dem besuchten Mobilkommunikationsnetz (200) zugeordnet ist, wobei das Verfahren - in Abhängigkeit von einem Hinweis (201) auf Unterstützung eines nicht-registrierten Notrufs im Zusammenhang mit dem besuchten Mobilkommunikationsnetz (200) und mit IP-Multimedia-Subsystem-Notrufen - entweder einen ersten und einen zweiten Schritt oder den ersten und einen dritten Schritt umfasst:
- im ersten Schritt empfängt die Benutzerausrüstung (20) - während sie an das besuchte Mobilkommunikationsnetz (200) angebunden ist - von dem besuchten Mobilkommunikationsnetz (200) den Hinweis (201) auf Unterstützung eines nicht-registrierten Notrufs bezüglich des besuchten Mobilkommunikationsnetzes (200), wobei der Hinweis (201) auf Unterstützung eines nicht-registrierten Notrufs angibt, ob das besuchte Mobilkommunikationsnetz (200) die Möglichkeit eines nicht-registrierten IP-Multimedia-Subsystem-Notrufs für die Benutzerausrüstung (20) entweder bereitstellt oder nicht bereitstellt, falls sie an das besuchte Mobilkommunikationsnetz (200) angebunden ist, wobei der Hinweis (201) auf Unterstützung eines nicht-registrierten Notrufs an die Benutzerausrüstung (20) während des Durchführens eines Anbindungsvorgangs, um an das besuchte Mobilkommunikationsnetz (200) angebunden zu werden, gesendet wird, wobei der Hinweis (201) auf Unterstützung eines nicht-registrierten Notrufs angibt, ob nicht-registrierte Notrufe innerhalb des besuchten Mobilkommunikationsnetzes erlaubt sind oder nicht, wobei der Hinweis (201) auf Unterstützung eines nicht-registrierten Notrufs zusammen mit lokalen Notrufnummern gesendet wird, die zum Absetzen eines IP-Multimedia-Subsystem-Notrufs zu verwenden sind,
- im zweiten Schritt, im Anschluss an den ersten Schritt, und falls ein IP-Multimedia-Subsystem-Notruf durch die Benutzerausrüstung (20) initiiert werden muss, während die Benutzerausrüstung (20) an das besuchte Mobilkommunikationsnetz (200) angebunden ist, initiiert die Benutzerausrüstung (20) den IP-Multimedia-Subsystem-Notruf zu dem besuchten Mobilkommunikationsnetz (200) als einen nicht-registrierten Notruf, falls der Hinweis (201) auf Unterstützung eines nicht-registrierten Notrufs angibt, dass das besuchte Mobilkommunikationsnetz (200) die Möglichkeit eines nicht-registrierten Notrufs bereitstellt, und
- im dritten Schritt, im Anschluss an den ersten Schritt, und falls ein IP-Multimedia-Subsystem-Notruf durch die Benutzerausrüstung (20) initiiert werden muss, während die Benutzerausrüstung (20) an das besuchte Mobilkommunikationsnetz (200) angebunden ist, versucht die Benutzerausrüstung (20), eine Notrufregistrierung bei dem besuchten Mobilkommunikationsnetz (200) zu initiieren, falls der Hinweis (201) auf Unterstützung eines nicht-registrierten Notrufs angibt, dass das besuchte Mobilkommunikationsnetz (200) nicht die Möglichkeit eines nicht-registrierten Notrufs bereitstellt, wobei die Benutzerausrüstung (20) im Fall eines Fehlschlagens der Notrufregistrierung versucht, sich mit einem weiteren besuchten Mobilkommunikationsnetz zu verbinden, um einen Notruf zu initiieren.

2. Verfahren nach Anspruch 1, wobei der Hinweis (201) auf Unterstützung eines nicht-registrierten Notrufs während der Durchführung eines Voice-over-LTE-Anbindungsvorgangs, insbesondere in Form eines erweiterten LTE-Anbindungsvorgangs, an die Benutzerausrüstung (20) gesendet wird.

3. Verfahren nach einem der vorangehenden Ansprüche, wobei der Hinweis (201) auf Unterstützung eines nicht-registrierten Notrufs an die Benutzerausrüstung (20) gesendet wird, während die Benutzerausrüstung (20) über einen Drahtloszugangspunkt unter Verwendung von Voice over WiFi, insbesondere unter Verwendung eines IP-Transporttunnels zwischen einem Evolved Packet Data Gateway und einem Packet Data Network Gateway, mit dem besuchten Mobilkommunikationsnetz (200) verbunden oder an das besuchte Mobilkommunikationsnetz (200) angebunden ist.

4. Verfahren nach einem der vorangehenden Ansprüche, wobei der Hinweis (201) auf Unterstützung eines nicht-registrierten Notrufs mittels mindestens eines der folgenden Transportprotokolle an die Benutzerausrüstung (20) gesendet wird:
- Rich Communication Services (RCS), insbesondere auf Basis des Hypertext-Transfer-Protokolls, und insbesondere unter Verwendung eines vollständig qualifizierten Domänennamens,
- Open Mobile Alliance Device Management (OMA DM), insbesondere auf Basis des Hypertext-Transfer-Protokolls und insbesondere unter Verwendung eines vollständig qualifizierten Domänennamens,
- mittels eines erweiterten Notrufregistrierungsvorgangs, insbesondere mittels Senden des Hinweises (201) auf Unterstützung eines nicht-registrierten Notrufs als Teil einer Sitzungsinitiierungsprotokollnachricht oder ihres Header-Feldes,
- mittels eines dedizierten Protokolls, das speziell zum Senden der Rufparameterinformationen (310) des IP-Multimedia-Subsystems und/oder der Notrufparameterinformationen (320) des IP-Multimedia-Subsystems verwendet wird,
- als Teil eines Managementobjekts.

5. Mobilkommunikationsnetz zur verbesserten Handhabung von IP-Multimedia-Subsystem-Notrufen und Einrichtung einer Benutzerausrüstung (20), die an das Mobilkommunikationsnetz, das als besuchtes Mobilkommunikationsnetz (200) dient, über ein Funkzugangsnetz des besuchten Mobilkommunikationsnetzes (200) angebunden ist oder dem besuchten Mobilkommunikationsnetz (200) zugeordnet ist, wobei das besuchte Mobilkommunikationsnetz (200) so eingerichtet ist, dass - in Abhängigkeit von einem Hinweis (201) auf Unterstützung eines nicht-registrierten Notrufs im Zusammenhang mit dem besuchten Mobilkommunikationsnetz (200) und mit IP-Multimedia-Subsystem-Notrufen -:
- das besuchte Mobilkommunikationsnetz (200) an die Benutzerausrüstung (20) - während die Benutzerausrüstung (20) an das besuchte Mobilkommunikationsnetz (200) angebunden ist - den Hinweis (201) auf Unterstützung eines nicht-registrierten Notrufs bezüglich des besuchten Mobilkommunikationsnetzes (200) sendet, wobei der Hinweis (201) auf Unterstützung eines nicht-registrierten Notrufs angibt, ob das besuchte Mobilkommunikationsnetz (200) die Möglichkeit eines nicht-registrierten IP-Multimedia-Subsystem-Notrufs für die Benutzerausrüstung (20) entweder bereitstellt oder nicht bereitstellt, falls sie an das besuchte Mobilkommunikationsnetz (200) angebunden ist, wobei der Hinweis (201) auf Unterstützung eines nicht-registrierten Notrufs an die Benutzerausrüstung (20) während des Durchführens eines Anbindungsvorgangs, um an das besuchte Mobilkommunikationsnetz (200) angebunden zu werden, gesendet wird, wobei der Hinweis (201) auf Unterstützung eines nicht-registrierten Notrufs angibt, ob nicht-registrierte Notrufe innerhalb des besuchten Mobilkommunikationsnetzes erlaubt sind oder nicht, wobei der Hinweis (201) auf Unterstützung eines nicht-registrierten Notrufs zusammen mit lokalen Notrufnummern gesendet wird, die zum Absetzen eines IP-Multimedia-Subsystem-Notrufs zu verwenden sind,
wobei entweder:
- falls ein IP-Multimedia-Subsystem-Notruf durch die Benutzerausrüstung (20) initiiert werden muss, während die Benutzerausrüstung (20) an das besuchte Mobilkommunikationsnetz (200) angebunden ist, das besuchte Mobilkommunikationsnetz (200) den IP-Multimedia-Subsystem-Notruf als einen nicht-registrierten Notruf von der Benutzerausrüstung (20) empfängt, falls der Hinweis (201) auf Unterstützung eines nicht-registrierten Notrufs angibt, dass das besuchte Mobilkommunikationsnetz (200) die Möglichkeit eines nicht-registrierten Notrufs bereitstellt,
oder:
- falls ein IP-Multimedia-Subsystem-Notruf durch die Benutzerausrüstung (20) initiiert werden muss, während die Benutzerausrüstung (20) an das besuchte Mobilkommunikationsnetz (200) angebunden ist, das besuchte Mobilkommunikationsnetz (200) einen Versuch durch die Benutzerausrüstung (20) empfängt, eine Notrufregistrierung bei dem besuchten Mobilkommunikationsnetz (200) zu initiieren, falls der Hinweis (201) auf Unterstützung eines nicht-registrierten Notrufs angibt, dass das besuchte Mobilkommunikationsnetz (200) nicht die Möglichkeit eines nicht-registrierten Notrufs bereitstellt.

6. Benutzerausrüstung (20) zur verbesserten Handhabung von IP-Multimedia-Subsystem-Notrufen und Einrichtung der Benutzerausrüstung (20), die an ein besuchtes Mobilkommunikationsnetz (200) über ein Funkzugangsnetz des besuchten Mobilkommunikationsnetzes (200) angebunden ist oder dem besuchten Mobilkommunikationsnetz (200) zugeordnet ist, wobei die Benutzerausrüstung (20) so eingerichtet ist, dass - in Abhängigkeit von einem Hinweis (201) auf Unterstützung eines nicht-registrierten Notrufs im Zusammenhang mit dem besuchten Mobilkommunikationsnetz (200) und mit IP-Multimedia-Subsystem-Notrufen -:
- die Benutzerausrüstung (20) - während sie an das besuchte Mobilkommunikationsnetz (200) angebunden ist - von dem besuchten Mobilkommunikationsnetz (200) den Hinweis (201) auf Unterstützung eines nicht-registrierten Notrufs bezüglich des besuchten Mobilkommunikationsnetzes (200) empfängt, wobei der Hinweis (201) auf Unterstützung eines nicht-registrierten Notrufs angibt, ob das besuchte Mobilkommunikationsnetz (200) die Möglichkeit eines nicht-registrierten IP-Multimedia-Subsystem-Notrufs für die Benutzerausrüstung (20) entweder bereitstellt oder nicht bereitstellt, falls sie an das besuchte Mobilkommunikationsnetz (200) angebunden ist, wobei der Hinweis (201) auf Unterstützung eines nicht-registrierten Notrufs durch die Benutzerausrüstung (20) während der Durchführung eines Anbindungsvorgangs, um an das besuchte Mobilkommunikationsnetz (200) angebunden zu werden, empfangen wird, wobei der Hinweis (201) auf Unterstützung eines nicht-registrierten Notrufs angibt, ob nicht-registrierte Notrufe innerhalb des besuchten Mobilkommunikationsnetzes erlaubt sind oder nicht, wobei der Hinweis (201) auf Unterstützung eines nicht-registrierten Notrufs zusammen mit lokalen Notrufnummern gesendet wird, die zum Absetzen eines IP-Multimedia-Subsystem-Notrufs zu verwenden sind,
wobei entweder:
- falls ein IP-Multimedia-Subsystem-Notruf durch die Benutzerausrüstung (20) initiiert werden muss, während die Benutzerausrüstung (20) an das besuchte Mobilkommunikationsnetz (200) angebunden ist, die Benutzerausrüstung (20) den IP-Multimedia-Subsystem-Notruf an das besuchte Mobilkommunikationsnetz (200) als einen nicht-registrierten Notruf initiiert, falls der Hinweis (201) auf Unterstützung eines nicht-registrierten Notrufs angibt, dass das besuchte Mobilkommunikationsnetz (200) die Möglichkeit eines nicht-registrierten Notrufs bereitstellt,
oder:
- falls ein IP-Multimedia-Subsystem-Notruf durch die Benutzerausrüstung (20) initiiert werden muss, während die Benutzerausrüstung (20) an das besuchte Mobilkommunikationsnetz (200) angebunden ist, versucht die Benutzerausrüstung (20), eine Notrufregistrierung bei dem besuchten Mobilkommunikationsnetz (200) zu initiieren, falls der Hinweis (201) auf Unterstützung eines nicht-registrierten Notrufs angibt, dass das besuchte Mobilkommunikationsnetz (200) nicht die Möglichkeit eines nicht-registrierten Notrufs bereitstellt, wobei die Benutzerausrüstung (20) im Fall eines Fehlschlagens der Notrufregistrierung versucht, sich mit einem weiteren besuchten Mobilkommunikationsnetz zu verbinden, um einen Notruf zu initiieren.

7. Computerprogrammprodukt, umfassend Instruktionen, die, wenn sie auf einem Computer oder in einem Netzknoten eines besuchten Mobilkommunikationsnetzes (200) oder in einer Benutzerausrüstung (20) oder teilweise in dem Netzknoten des besuchten Mobilkommunikationsnetzes (200) und teilweise in der Benutzerausrüstung (20) ausgeführt werden, den Computer oder den Netzknoten des besuchten Mobilkommunikationsnetzes (200) oder die Benutzerausrüstung (20) veranlassen, ein Verfahren nach einem der Ansprüche 1 bis 4 durchzuführen.

8. Computerlesbares Medium, umfassend Instruktionen, die, wenn sie auf einem Computer oder in einem Netzknoten eines besuchten Mobilkommunikationsnetzes (200) oder in einer Benutzerausrüstung (20) oder teilweise in dem Netzknoten des besuchten Mobilkommunikationsnetzes (200) und teilweise in der Benutzerausrüstung (20) ausgeführt werden, den Computer oder den Netzknoten des besuchten Mobilkommunikationsnetzes (200) oder die Benutzerausrüstung (20) veranlassen, ein Verfahren nach einem der Ansprüche 1 bis 4 durchzuführen.

## Revendications

1. Procédé pour améliorer le traitement des appels d'urgence de sous-système multimédia IP et la configuration d'un équipement utilisateur (20) rattaché à un réseau de communication mobile visité (200) par l'intermédiaire d'un réseau d'accès radio du réseau de communication mobile visité (200) ou associé à celui-ci, dans lequel le procédé comprend - en fonction d'une indication de support d'appel d'urgence non enregistré (201) liée au réseau de communication mobile visité (200) et à des appels d'urgence de sous-système multimédia IP - soit une première et une deuxième étape, soit la première et une troisième étape :
- dans la première étape, l'équipement utilisateur (20) - tandis qu'il est rattaché au réseau de communication mobile visité (200) - reçoit, à partir du réseau de communication mobile visité (200), l'indication de support d'appel d'urgence non enregistré (201) concernant le réseau de communication mobile visité (200), l'indication de support d'appel d'urgence non enregistré (201) étant indicative du fait que le réseau de communication mobile visité (200) offre ou n'offre pas la possibilité d'un appel d'urgence de sous-système multimédia IP non enregistré pour l'équipement utilisateur (20) dans le cas où il est rattaché au réseau de communication mobile visité (200), dans lequel l'indication de support d'appel d'urgence non enregistré (201) est transmise à l'équipement utilisateur (20) pendant l'exécution d'une procédure de rattachement afin d'être rattaché au réseau de communication mobile visité (200), dans lequel l'indication de support d'appel d'urgence non enregistré (201) indique si oui ou non les appels d'urgence non enregistrés sont autorisés au sein du réseau de communication mobile visité, dans lequel l'indication de support d'appel d'urgence non enregistré (201) est transmise en même temps que des numéros d'urgence locaux à utiliser pour placer un appel d'urgence du sous-système multimédia IP,
- dans la deuxième étape suivant la première étape, et dans le cas où un appel d'urgence de sous-système multimédia IP doit être lancé par l'équipement utilisateur (20) tandis que l'équipement utilisateur (20) est rattaché au réseau de communication mobile visité (200), l'équipement utilisateur (20) lance l'appel d'urgence de sous-système multimédia IP vers le réseau de communication mobile visité (200) comme un appel d'urgence non enregistré dans le cas où l'indication de support d'appel d'urgence non enregistré (201) indique que le réseau de communication mobile visité (200) offre la possibilité d'un appel d'urgence non enregistré, et
- dans la troisième étape suivant la première étape, et dans le cas où un appel d'urgence de sous-système multimédia IP doit être lancé par l'équipement utilisateur (20) tandis que l'équipement utilisateur (20) est rattaché au réseau de communication mobile visité (200), l'équipement utilisateur (20) tente de lancer un enregistrement d'urgence avec le réseau de communication mobile visité (200) dans le cas où l'indication de support d'appel d'urgence non enregistré (201) indique que le réseau de communication mobile visité (200) n'offre pas la possibilité d'un appel d'urgence non enregistré, dans lequel dans le cas où l'enregistrement d'urgence échoue, l'équipement utilisateur (20) tente de se connecter à un autre réseau de communication mobile visité afin de lancer un appel d'urgence.

2. Procédé selon la revendication 1, dans lequel l'indication de support d'appel d'urgence non enregistré (201) est transmise à l'équipement utilisateur (20) pendant l'exécution d'une procédure de rattachement de voix sur LTE, notamment sous la forme d'une procédure de rattachement LTE étendue.

3. Procédé selon l'une des revendications précédentes, dans lequel l'indication de support d'appel d'urgence non enregistré (201) est transmise à l'équipement utilisateur (20) pendant que l'équipement utilisateur (20) est connecté ou rattaché au réseau de communication mobile visité (200) via un point d'accès sans fil utilisant la voix sur WiFi, en particulier en utilisant un tunnel de transport IP entre une passerelle de données par paquets évoluée et une passerelle de réseau de données par paquets.

4. Procédé selon l'une des revendications précédentes, dans lequel l'indication de support d'appel d'urgence non enregistré (201) est transmise à l'équipement utilisateur (20) au moyen d'au moins l'un des protocoles de transport suivants :
- les services de communication riches (RCS), notamment basés sur le protocole de transfert hypertexte, et notamment en utilisant un nom de domaine pleinement qualifié,
- la gestion des dispositifs de l'alliance mobile ouverte (OMA DM), notamment sur la base du protocole de transfert hypertexte, et notamment en utilisant un nom de domaine entièrement qualifié,
- au moyen d'une procédure d'enregistrement d'urgence étendue, en particulier au moyen de la transmission de l'indication de support d'appel d'urgence non enregistré (201) en tant que partie d'un message de protocole d'initiation de session ou d'un champ d'en-tête de celui-ci,
- au moyen d'un protocole dédié spécifiquement utilisé pour transmettre les informations de paramètres d'appel du sous-système multimédia IP (310) et/ou les informations de paramètres d'appel d'urgence du sous-système multimédia IP (320)
- comme partie d'un objet de gestion.

5. Réseau de communication mobile pour un traitement amélioré des appels d'urgence de sous-système multimédia IP et la configuration d'un équipement utilisateur (20) qui est rattaché au réseau de communication mobile servant de réseau de communication mobile visité (200) par l'intermédiaire d'un réseau d'accès radio du réseau de communication mobile visité (200) ou associé à celui-ci, dans lequel le réseau de communication mobile visité (200) est configuré de telle sorte que, en fonction d'une indication de support d'appel d'urgence non enregistré (201) liée au réseau de communication mobile visité (200) et à des appels d'urgence du sous-système multimédia IP,
- le réseau de communication mobile visité (200) transmet à l'équipement utilisateur (20) - pendant que l'équipement utilisateur (20) se rattache au réseau de communication mobile visité (200) - l'indication de support d'appel d'urgence non enregistré (201) concernant le réseau de communication mobile visité (200), l'indication de support d'appel d'urgence non enregistré (201) étant indicative du fait que le réseau de communication mobile visité (200) offre ou n'offre pas la possibilité d'un appel d'urgence de sous-système multimédia IP non enregistré pour l'équipement utilisateur (20) dans le cas où il est rattaché au réseau de communication mobile visité (200), dans lequel l'indication de support d'appel d'urgence non enregistré (201) est transmise à l'équipement utilisateur (20) pendant l'exécution d'une procédure de rattachement afin d'être rattaché au réseau de communication mobile visité (200), dans lequel l'indication de support d'appel d'urgence non enregistré (201) indique si oui ou non les appels d'urgence non enregistrés sont autorisés au sein du réseau de communication mobile visité, dans lequel l'indication de support d'appel d'urgence non enregistré (201) est transmise en même temps que des numéros d'urgence locaux à utiliser pour placer un appel d'urgence du sous-système multimédia IP,
dans lequel soit :
- dans le cas où un appel d'urgence de sous-système multimédia IP doit être lancé par l'équipement utilisateur (20) tandis que l'équipement utilisateur (20) est rattaché au réseau de communication mobile visité (200), le réseau de communication mobile visité (200) reçoit l'appel d'urgence de sous-système multimédia IP comme un appel d'urgence non enregistré de l'équipement utilisateur (20) dans le cas où l'indication de support d'appel d'urgence non enregistré (201) indique que le réseau de communication mobile visité (200) offre la possibilité d'un appel d'urgence non enregistré,
soit :
- dans le cas où un appel d'urgence de sous-système multimédia IP doit être lancé par l'équipement utilisateur (20) tandis que l'équipement utilisateur (20) est rattaché au réseau de communication mobile visité (200), le réseau de communication mobile visité (200) reçoit une tentative par l'équipement utilisateur (20) de lancer un enregistrement d'urgence avec le réseau de communication mobile visité (200) dans le cas où l'indication de support d'appel d'urgence non enregistré (201) indique que le réseau de communication mobile visité (200) n'offre pas la possibilité d'un appel d'urgence non enregistré.

6. Équipement utilisateur (20) pour un traitement amélioré des appels d'urgence de sous-système multimédia IP et la configuration de l'équipement utilisateur (20) qui est rattaché à un réseau de communication mobile visité (200) par l'intermédiaire d'un réseau d'accès radio du réseau de communication mobile visité (200) ou associé à celui-ci, dans lequel l'équipement utilisateur (20) est configuré de telle sorte que, en fonction d'une indication de support d'appel d'urgence non enregistré (201) liée au réseau de communication mobile visité (200) et à des appels d'urgence de sous-système multimédia IP,
- l'équipement utilisateur (20) - tandis qu'il est rattaché au réseau de communication mobile visité (200) - reçoit, à partir du réseau de communication mobile visité (200), l'indication de support d'appel d'urgence non enregistré (201) concernant le réseau de communication mobile visité (200), l'indication de support d'appel d'urgence non enregistré (201) étant indicative du fait que le réseau de communication mobile visité (200) offre ou n'offre pas pas la possibilité d'un appel d'urgence de sous-système multimédia IP non enregistré pour l'équipement utilisateur (20) dans le cas où il est rattaché au réseau de communication mobile visité (200), dans lequel l'indication de support d'appel d'urgence non enregistré (201) est reçue par l'équipement utilisateur (20) pendant l'exécution d'une procédure de rattachement afin d'être rattaché au réseau de communication mobile visité (200), dans lequel l'indication de support d'appel d'urgence non enregistré (201) indique si oui ou non les appels d'urgence non enregistrés sont autorisés au sein du réseau de communication mobile visité, dans lequel l'indication de support d'appel d'urgence non enregistré (201) est transmise en même temps que des numéros d'urgence locaux à utiliser pour placer un appel d'urgence du sous-système multimédia IP,
dans lequel soit :
- dans le cas où un appel d'urgence de sous-système multimédia IP doit être lancé par l'équipement utilisateur (20) tandis que l'équipement utilisateur (20) est rattaché au réseau de communication mobile visité (200), l'équipement utilisateur (20) lance l'appel d'urgence de sous-système multimédia IP vers le réseau de communication mobile visité (200) comme un appel d'urgence non enregistré dans le cas où l'indication de support d'appel d'urgence non enregistré (201) indique que le réseau de communication mobile visité (200) offre la possibilité d'un appel d'urgence non enregistré,
soit :
- dans le cas où un appel d'urgence de sous-système multimédia IP doit être lancé par l'équipement utilisateur (20) tandis que l'équipement utilisateur (20) est rattaché au réseau de communication mobile visité (200), l'équipement utilisateur (20) tente de lancer un enregistrement d'urgence avec le réseau de communication mobile visité (200) dans le cas où l'indication de support d'appel d'urgence non enregistré (201) indique que le réseau de communication mobile visité (200) n'offre pas la possibilité d'un appel d'urgence non enregistré, dans lequel, dans le cas où l'enregistrement d'urgence échoue, l'équipement utilisateur (20) tente de se connecter à un autre réseau de communication mobile visité afin de lancer un appel d'urgence.

7. Produit programme d'ordinateur comprenant des instructions qui, lorsqu'elles sont exécutées sur un ordinateur ou sur un nœud de réseau d'un réseau de communication mobile visité (200) ou sur un équipement utilisateur (20), ou en partie sur le nœud de réseau du réseau de communication mobile visité (200) et en partie sur l'équipement utilisateur (20), amènent l'ordinateur ou le nœud de réseau du réseau de communication mobile visité (200) ou l'équipement utilisateur (20) à exécuter un procédé selon l'une des revendications 1 à 4.

8. Support lisible par ordinateur comprenant des instructions qui, lorsqu'elles sont exécutées sur un ordinateur ou sur un nœud de réseau d'un réseau de communication mobile visité (200) ou sur un équipement utilisateur (20), ou en partie sur le nœud de réseau du réseau de communication mobile visité (200) et en partie sur l'équipement utilisateur (20), amènent l'ordinateur ou le nœud de réseau du réseau de communication mobile visité (200) ou l'équipement utilisateur (20) à exécuter un procédé selon l'une des revendications 1 à 4.
